(19) Europäisches Patentamt
European Patent Office
Office européen des brevets

(11) **EP 4 742 175 B1**

(12) **EUROPEAN PATENT SPECIFICATION**

(45) Date of publication and mention
of the grant of the patent:
**29.07.2026 Bulletin 2026/31**

(21) Application number: **24212164.8**

(22) Date of filing: **11.11.2024**

(51) International Patent Classification (IPC):
*G06V 10/24* (2022.01)     *G06V 10/20* (2022.01)
*G06V 10/776* (2022.01)

(52) Cooperative Patent Classification (CPC):
**G06V 10/255; G06V 10/24; G06V 10/776**

(54) **IDENTIFYING A POTENTIAL FALSE POSITIVE DETECTION BOX**

IDENTIFIZIERUNG EINER POTENTIONALEN FALSCH-POSITIVEN DETEKTIONSBOX

IDENTIFICATION D'UN BOÎTIER DE DÉTECTION DE FAUX POSITIFS PUISSANT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**13.05.2026 Bulletin 2026/20**

(73) Proprietor: **Axis AB**
**223 69 Lund (SE)**

(72) Inventors:
• **Hasselberg, Emanuel**
**223 69 Lund (SE)**
• **Ärlebäck, Richard**
**223 69 Lund (SE)**
• **Eriksson, Jonatan**
**223 69 Lund (SE)**

(74) Representative: **AWA Sweden AB**
**Matrosgatan 1**
**Box 5117**
**200 71 Malmö (SE)**

(56) References cited:
**CN-B- 114 462 533**

• **RUI LI ET AL: "DB-NMS: improving non-maximum suppression with density-based clustering", NEURAL COMPUTING AND APPLICATIONS, SPRINGER LONDON, LONDON, vol. 34, no. 6, 25 October 2021 (2021-10-25), pages 4747 - 4757, XP037706597, ISSN: 0941-0643, [retrieved on 20211025], DOI: 10.1007/S00521-021-06628-W**

**Description**

<u>Technical Field</u>

The present disclosure relates to object detection, and in particular to a method, system and software for identifying a potential false positive detection box within an anchor-based object detection system.

<u>Background</u>

In modern object detection systems such as Single Shot Detectors (SSD) and YOLO (You Only Look Once), anchor boxes are fundamental for detecting objects across an image. These anchor boxes are predefined and typically cover the image at various scales and aspect ratios to detect objects of different sizes and shapes. During training, the object detection system learns to adjust these anchor boxes to better fit objects by encoding those that have a high Intersection over Union (IoU) score, representing the overlap between the anchor box and the ground truth object. An anchor box with a significant IoU overlap is assigned to that object for training purposes.

A significant issue may arise when multiple objects are located close to each other, or when anchor boxes are sparsely distributed across the image. In such situations, more than one object can have a similar IoU with a particular anchor box, leading to ambiguous assignments during training. This ambiguity can cause a phenomenon referred to as in-between detections.

When two or more objects share similar IoU scores with the same anchor box, the object detection systems may inconsistently assign the anchor box to different objects during training. This results in an in-between detections which is a false positive detection or ambiguous detection, an erroneous detection box positioned between the real objects. These in-between detections negatively affect the performance of the object detection system by introducing false positives.

There is thus a need for improvements in this context.

"DB-NMS: improving non-maximum suppression with density-based clustering (Rui et al, Neural Computing and Applications) describes a density-based non-maximum suppression (DB-NMS), which is based on the density distributions of bounding boxes' centre points to evaluate the importance of difference anchors.

<u>Summary</u>

In view of the above, solving or at least reducing one or several of the drawbacks discussed above would be beneficial, as set forth in the attached independent patent claims.

The invention is defined by the subject-matter of the independent claims.

According to a first aspect of the present invention, there is provided method for identifying a potential false positive detection box in a set of three detection boxes within an anchor-based object detection system, wherein each of the three detection boxes is detected in a same image frame, wherein each of the three detection boxes is associated with a respective predicted intersective over union, IoU, score, wherein the predicted IoU score indicates a confidence of the anchor-based object detection system that the detection box represents an object, the method comprising: determining that a second detection box overlaps at least partly with both a first detection box and a third detection box, wherein the second detection box is located between the first detection box and the third detection box in the image frame; identifying that the second detection box is a potential false positive detection box by: determining that the predicted IoU score of the second detection box is lower than a first threshold score; and determining a first reference points in the first detection box, a corresponding second reference point in the second detection box and a corresponding third reference point in the third detection box, and determining that the first, second, and third reference points are substantially aligned in the image frame, such that the second reference point is within a threshold distance from an alignment defined by the first and third reference point.

This disclosure addresses the problem of in-between detections caused by ambiguous anchor box assignments during training of an anchor-based object detection systems, particularly in situations where the anchor boxes are sparsely distributed. The techniques described herein aims to enhance detection accuracy by identifying potential false positive detection boxes that arise from this ambiguity. Specifically, the method focuses on identifying detection boxes that may fall between real objects.

The method introduces strategies for managing ambiguous detection boxes while minimizing computational impact, thereby allowing object detection systems to maintain reliable performance even under hardware constraints or when anchor boxes are distributed sparsely. By identifying these ambiguous detection boxes, object detection systems are better equipped to handle false positives, improving both accuracy and efficiency.

The "predicted IoU score" in object detection systems like SSD or YOLO refers to a measure predicted by the object detection system/model that indicates how well a proposed detection (a bounding box) is likely to overlap with an actual object in the image. IoU (Intersection over Union) traditionally refers to the ratio of the overlapping area between the predicted bounding box and the ground truth box divided by the area of their union. However, the predicted IoU score in this context serves as a confidence measure, predicting how likely it is that the bounding box generated by the object detection model corresponds to a real object before any post-processing. IOU prediction may be though off as the object detection system trying to predict the geometric IOU between the predicted bounding box and an "imagined" ground truth bounding box.

This predicted IoU score is sometimes also referred to as "Objectness score". Objectness score or predicted IoU score thus represents the likelihood or confidence that a given bounding box (detection box) contains an object, as opposed to just background.

To filter out a detection box and check if it is a potential in-between detection, the method first verifies whether the detection box overlaps at least partially with both a first detection box and a third detection box, with the second detection box positioned between the first and third detection boxes in the image frame. This serves as an efficient first filtering step before more complex analysis is applied.

Secondly, the predicted IoU score is evaluated. A low predicted IoU score may suggest that the detection box is a potentially ambiguous detection (a potential in-between detection, potential false positive). However, the inventors have recognized that the predicted IoU score provided by the object detection system is not always a reliable indicator. Relying solely on filtering based on a low predicted IoU score (i.e., below a predefined threshold) can result in a high rate of false negatives, as actual object detections may be incorrectly classified as false positives.

The inventors have also realized that ambiguous detection boxes, resulting from inconsistently assigning an anchor box to different objects during training, typically lies approximately along a common path with two neighbouring detection boxes. The alignment is determined by identifying corresponding reference points in the three detection boxes, meaning the reference points are in the same relative position within each box (e.g., the centre, top left corner, or middle of the top edge, etc.). These three reference points are then evaluated to determine if they are substantially aligned within the image frame. To assess this, it is checked whether the second reference point (the one belonging to the potentially ambiguous detection box) lies within a specified threshold distance from the alignment defined by the first and third reference points. This threshold allows for minor deviations, ensuring that the system can accommodate slight variations in the positioning of the three detection boxes while still identifying the overall alignment between them.

According to some examples, determining that the first, second, and third reference points are substantially aligned comprises: determining a first vector between a first pair of reference points selected from the first, second and third reference points, and a second vector between a second, different, pair of reference points selected from the first, second and third reference points, wherein the first, second, and third reference points are substantially aligned in the image frame if an absolute value of the cosine of the angle $\theta$ between the first and second vectors is less than a threshold from 1.

Advantageously, the cosine of the angle directly measures the relative orientation of the reference points, making the evaluation of alignment both accurate and consistent.

According to some examples, determining that the first, second, and third reference points are substantially aligned comprises: determining that the second reference point lies within a threshold distance from the line formed between the first and third reference points.

Advantageously, checking whether a point lies within a threshold distance from a line is a low-complexity orientation-agnostic geometric operation. It can be implemented in systems with limited computational resources, thus advantageous for real-time processing or hardware-constrained environments.

According to some embodiments, identifying that the second detection box is a potential false positive detection is further performed by: determining that the predicted IoU score of the second detection box is least a second threshold score lower than the predicted IoU scores of each of the first detection box and the third detection box.

Advantageously, using relative comparisons of the predicted IoU scores, precision in identifying potential false positives may be improved. Instead of relying solely on absolute IoU thresholds, which may lead to misclassifications, this approach uses the difference to the IoU scores of neighbouring detection boxes.

In some examples, each of the three detection boxes is associated with a predicted object class, wherein identifying that the second detection box is a potential false positive detection is further performed by determining that the predicted object class associated with each of the first, second and third detection boxes are the same. The problem leading to in-between detection during the training of the object detection system may arise more frequently when two objects of the same class have a similar IoU with a particular anchor box. Consequently, filtering based on the three detection boxes being associated with the same class may provide a more effective means of identifying in-between detections, leading to more accurate object detection.

In some examples, the first, second and third reference points are the midpoint of the top edge of the first, second and third detection boxes, respectively. For example, when the camera is capturing the objects from the side or front, meaning the objects are viewed from a horizontal or angled perspective in the image frame, rather than from above, the top edges of the detection boxes provide a clear and stable reference for alignment.

In some examples, the first, second and third reference points are the centre point of the first, second and third detection boxes, respectively. This approach may be particularly effective when the camera is capturing the objects from a top-down perspective. In such cases, the centre of each detection box provides a clear and stable reference for alignment.

In some examples, the method further comprises assigning a lower probability to the second detection box for association with an object track in an object tracking system, compared to probabilities assigned to the first and third detection boxes

In these examples, the method does not necessarily delete the second detection box, as there may not be sufficient certainty that it is a true false positive; it could still represent a valid object. Instead, the second detection box, flagged as a potential false positive, is down weighted in subsequent post-analysis, such as object tracking. This approach ensures that the second detection box is not prioritized in the tracking process but remains considered in case it represents an actual object. By reducing the likelihood that the second detection box is associated with an object track, the method may prevent prematurely discarding potentially valid detections while mitigating the risk of associating false positives with object tracks, thereby facilitating an enhanced accuracy and robustness of the tracking process.

In some examples, assigning a lower probability comprises assigning a higher cost for association of the second detection box with the object track, compared to the cost for association of the first detection box or the third detection box with the object track.

In object tracking systems, cost functions are often used to determining the likelihood or confidence of matching a detection box to an existing object track. By assigning a higher cost to the second detection box (e.g., adding, or multiplying, the cost with a constant value), the method may effectively reduce the probability of associating it with the track, indicating a lower confidence that this detection corresponds to a real object, and making it less likely to be selected unless other evidence (feature vector similarity, position, etc) strongly favours it. The matching cost can further be based on feature distance, motion information, etc. The association algorithm may for example be greedy, i.e., start by matching the lowest costs.

In some examples, assigning a lower probability comprises assigning the second detection box to a lower-priority partition of detection boxes for association with the object track, and assigning the first and third detection boxes to a higher-priority partition of detection boxes for association with the object track, wherein the partitions being processed sequentially to associate tracks in the object tracking system.

Advantageously, only after attempting to associate tracks with the higher-priority detection boxes does the method move on to process the lower-priority partition, which contains detection boxes that may for example contain potential false positive detection box(es), such as the second detection box. As a result, the robustness of the object tracking system may be improved by prioritizing more confident object detections while still accounting for ambiguous object detections. The method may reduce the risk of associating false positives with object tracks, potentially leading to more accurate tracking outcomes.

In some examples, the method further comprises filtering out the second detection box from a set of detection boxes in the first image frame that are marked as potential new object tracks in an object tracking system.

In object tracking, when detection boxes that cannot be matched to any existing object tracks are detected in the image frame (meaning the detection boxes do not correspond to objects already being tracked), these unmatched boxes may be considered as candidates for creating new object tracks, which represent objects that will be tracked in subsequent image frames. By filtering out the second detection box (in case it cannot be matched to an existing track), which might be a false positive detection as discussed above, the method reduces the likelihood of creating new object tracks for misdetections. This may result in a more accurate tracking system that maintains valid tracks and avoids tracking non-existent objects. Advantageously, the risk of creation of incorrect or unnecessary object tracks may be reduced.

In some examples, the method further comprises counting the first and third detection boxes as confirmed objects in an object counting system and counting the second detection box as an uncertain object in the object counting system. This means that the first and third detection boxes, which are more confidently identified, are treated as actual objects for the purpose of object counting, whereas the second detection box, which may be ambiguous or potentially a false positive, is flagged as uncertain. Rather than disregarding the second detection box completely, the system tracks it separately as an object with lower confidence, allowing for further analysis or verification. Advantageously, the risk of overcounting caused by false positives or ambiguous detections may be reduced. This separation may allow for primarily focusing on high-confidence objects while still monitoring lower-confidence ones without falsely inflating the object count.

In some examples, the method further comprises filtering out the second detection box from an initial set of detection boxes that includes the first, second, and third detection boxes, and using the remaining set of detection boxes in a downstream analysis system.

In computational contexts, the term "downstream" refers to subsequent processes that rely on the output from earlier steps or systems, such as object tracking, object analysis, alarm systems, or other decision-making processes. In this example, the second detection box, which may be ambiguous or less reliable, is filtered out before the downstream analysis, ensuring that only the most confident and relevant detection boxes, like the first and third, are used for further processing. Advantageously, this approach may help to improve the accuracy and efficiency of downstream systems by preventing unreliable or ambiguous detections (such as the second detection box) from impacting later stages of analysis.

For instance, in object tracking or alarm systems, filtering out potential false positives reduces the chance of erroneous outcomes, such as false alarms or inaccurate object tracking.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by an anchor-based object detecting system configured for identifying a potential false positive detection box in a set of three detection boxes, wherein each of the three detection boxes is detected in a same image frame, wherein each of the three detection boxes is associated with a respective predicted intersective over union, IoU, score, wherein the predicted IoU score indicates a confidence of by the anchor-based object detecting system that the detection box represents an object, the anchor-based object detecting system configured for: determining that a second detection box overlaps at least partly with both a first detection box and a third detection box, wherein the second detection box is located between the first detection box and the third detection box in the image frame; identifying that the second detection box is a potential false positive detection box by: determining that the IoU score of the second detection box is lower than a first threshold score; and determining a first reference points in the first detection box, a corresponding second reference point in the second detection box and a corresponding third reference point in the third detection box, and determining that the first, second, and third reference points are substantially aligned in the image frame, such that the second reference point is within a threshold distance from an alignment defined by the first and third reference point.

The second and third aspect may generally have the same features and advantages as the first aspect. It is further noted that the disclosure relates to all possible combinations of features unless explicitly stated otherwise.

Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:

Figure 1 shows training of an anchor box in an anchor-based object detection system using multiple of image frames, according to embodiments;

Figure 2 shows a first alignment metric between three detection boxes used to identify a potential false positive detection box, according to embodiments;

Figure 3 shows a second alignment metric between three detection boxes used to identify a potential false positive detection box, according to embodiments;

Figure 4 shows a flow chart of a method for identifying a potential false positive detection box, according to embodiments;

Figure 5 shows a system with an object detection system and a downstream analysis system according to embodiments.

Detailed Description

In object detection systems, such as Single Shot Detectors (SSD) and YOLO (You Only Look Once), anchor boxes are used extensively across the image to detect objects at different scales and aspect ratios. When anchor boxes are distributed densely, it allows for a high level of detection accuracy by covering a wide range of possible object sizes and locations. However, maintaining a dense distribution of anchor boxes requires significant computational power, as the object detection system needs to process a large number of potential detection boxes in every image. To reduce the hardware resources needed for such computations, and/or to address computational hardware constraints, such as the need for less costly or lower-power hardware, the number of anchor boxes can be reduced.

However, this reduction in anchor boxes introduces challenges during the training process of the object detection system. When the number of anchor boxes is reduced, the object detection system may struggle to differentiate between closely spaced objects. During training, the reduced number of anchor boxes increases the likelihood that a single anchor box will overlap with multiple objects, leading to ambiguous assignments. This ambiguity may cause the object detection system to alternately assign the same anchor box to different objects across different training steps, creating in-between detections. These in-between detections, which occur due to anchor boxes being shared between neighbouring objects, reduce detection accuracy and complicate the ability of the object detection system to learn precise object boundaries. Thus, while reducing the number of anchor boxes improves computational efficiency, it also introduces difficulties in the training process that may be addressed to ensure reliable object detection.

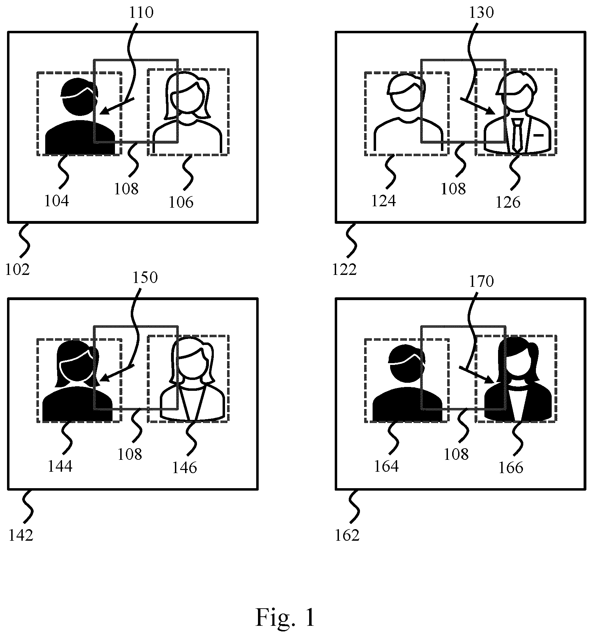

Figure 1 schematically shows, by way of example, the cause of the in-between detections during training of the object detection system. In figure 1, four images 102, 122, 142, 162 are used to train the object detection system. Each of the images 102, 122, 142, 162 comprises two objects and the arrangement of these objects in relation to an anchor box 108, leads to ambiguity in the training process, ultimately resulting in in-between detections, as now will be explained.

The top-left image 102 contains two objects, 104 and 106, as well as a single anchor box, 108. It is important to note that in practice, the image 108 would include many more anchor boxes. However, for the sake of simplicity and clarity in this explanation, only one anchor box 108 is depicted.

As shown in Figure 1, the anchor box 108 overlaps both objects, 104 and 106, to a similar extent. This results in the Intersection over Union (IoU) score of the anchor box 108 being similar for both objects. The IoU score is represented by the overlap between the anchor box 108 with the dashed rectangle indicating a bounding box of respective objects 104, 106. The similarity in IoU scores creates ambiguity during the training process, as the system cannot easily determine which object the anchor box should represent. As indicated by the arrow 110, in the case of the top-left image 102, the object detection system assigns or encodes the anchor box 108 to the left object 104. In this context, "assigning" or "encoding" means that the object detection system chooses the anchor box 108 to represent a particular object, in this case the left object 104, adjusting parameters (bounding box coordinates, class prediction, etc.) of the anchor box to best fit the left object 104.

The top-right image 122 in figure 1 contains two objects, 124 and 126, as well as the anchor box, 108. In this case, as indicated by the arrow 130, the object detection system assigns or encodes the anchor box 108 to the right object 126.

The bottom-left image 142 in figure 1 contains two objects, 144 and 146, as well as the anchor box, 108. In this case, as indicated by the arrow 150, the object detection system assigns or encodes the anchor box 108 to the left object 144.

The bottom-right image 162 in figure 1 contains two objects, 164 and 166, as well as the anchor box, 108. In this case, as indicated by the arrow 170, the object detection system assigns or encodes the anchor box 108 to the right object 166.

As illustrated in Figure 1 and discussed above, the inconsistency in assigning anchor boxes to different objects due to similar overlaps during training, where the same anchor box is alternately associated with different objects across training using a plurality of training images, can reduce the object detection system's ability to learn accurate object boundaries. As understood from the above, these objects may not necessarily be the same across all images, but they may share similar characteristics, such as size and position, making it difficult for the system to consistently assign the anchor box to the correct object. This problem may mainly arise when the two objects that the anchor box alternates between belong to the same class, as this often means the anchor box fits both objects equally well, making it more difficult for the system to distinguish between them.

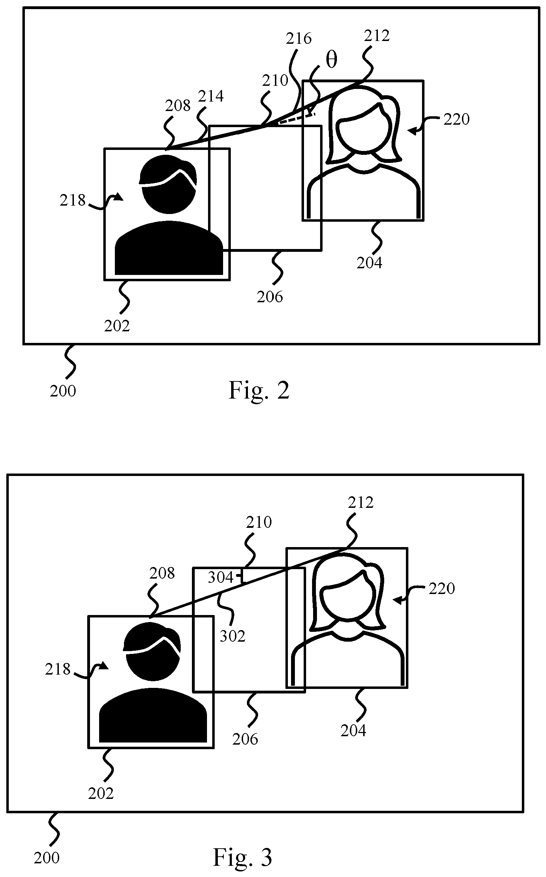

This issue may result in in-between detections during the inference phase of the object detection system, where ambiguous or false positive detection boxes appear between actual objects. Figures 2 and 3 below provide examples of how such in-between detections can be identified using alignment metrics that analyse the spatial relationships between three partially overlapping detection boxes.

Figure 2 shows an image frame 200 including two objects 218, 220 and three detection boxes 202, 204, 206. The detection box 202 will be referred to as a first detection box 202. The detection box 206 will be referred to as a second detection box 206. The detection box 204 will be referred to as a third detection box 204.

In order to identify a potential false positive detection box, it is first determined that the second detection box 206 overlaps at least partly with both the first detection box 202 and the third detection box 204, wherein the second detection box 206 is located between the first detection box 202 and the third detection box 204 in the image frame 200.

When such a second detection box 206 is found, alignment between the three detection boxes 202, 204, 206 can be checked.

It has been found by the inventors that if the first, second, and third detection boxes 202, 204, 206 are substantially aligned, this may point to that the middle detection box 206 is a potential false positive detection box. There are many ways of determining an alignment metric between the set of three detection boxes 202, 204, 206. Using corresponding reference points of the respective detection boxes, such a metric may be consistently determined.

In figure 2, a first reference point 208 is the midpoint of the top edge of the first detection box 202. Correspondingly a second reference point 210 is the midpoint of the top edge of the second detection box 206 and third reference point 212 is the midpoint of the top edge of the third detection box 204.

According to one example, the alignment metric may be determined using a first vector 214 between a first pair of reference points selected from the first, second and third reference points, and a second vector 216 between a second, different, pair of reference points selected from the first, second and third reference points. This embodiment is shown by way of example in figure 2.

In the example of figure 2, the first vector 214 is a vector between the first reference point 208 and the second reference point 210. The second vector 216 is a vector between the second reference point 210 and the third reference point 212.

In another example, the first vector is a vector between the first reference point 208 and the second reference point 210. The second vector is a vector between the first reference point 208 and the third reference point 212.

In yet another example, the first vector is a vector between the first reference point 208 and the third reference point 212. The second vector is a vector between the second reference point 210 and the third reference point 212.

To determine the alignment vector, cosine of the angle θ between the first and second vector can be determined:

$$\cos(\theta) = \frac{V_1 \cdot V_2}{|V_1||V_2|} \qquad \qquad equation\ 1$$

where $V_1$ = first vector and $V_2$ = second vector.

The alignment metric may for example be determined by:

$$1 - |\cos(\theta)| \qquad \qquad equation\ 2$$

For example, it can be determined that first, second, and third reference points are substantially aligned in the image frame if an absolute value of the cosine of the angle θ between the first and second vectors is less than a threshold from 1:

$$1 - |\cos(\theta)| < \varepsilon \qquad \qquad equation\ 3$$

where ε = threshold.

Figure 3 shows another example of how to determine the alignment metric between the set of three detection boxes 202, 204, 206. The same image frame 200 is used in figure 3 as in figure 2, and the same reference points 208, 210, 212. According to the example shown in figure 3, the alignment metric may be determined by determining a distance 304 from the second reference point 210 to a line 302 formed between the first 208 and third 212 reference points.

If the first reference point 208 is at (x1, y1), the third reference point is at (x3, y3) and the second reference point is at (x2, y2) the following equation can be used to determine distance $d$:

$$d = \frac{|(y3-y1)x2-(x3-x1)y2+x3y1-y3x1|}{\sqrt{(y3-y1)^2+(x3-x1)^2}} \qquad \qquad equation\ 4$$

This distance d represents the shortest distance from the second reference point to the line defined by the first and third reference points. Alternatively, if we consider the vector V from the first reference point to the third reference point, and point P as the second reference box, then d can also be seen as the length of the orthogonal projection of P onto V. This projection allows us to determine the alignment of the reference points.

For example, if d is less than a threshold σ, the first, second, and third reference points are considered substantially aligned in the image frame:

$$d < \sigma \qquad \qquad equation\ 5$$

where σ = the threshold distance.

Suitable values of ε and/or σ may for example be determined according to the following process:

- run the object detector on a dataset and flag (automatically or manually) detection boxes that overlap two other detection boxes as potential in-between detections.
- These flagged detections can then be reviewed and annotated by a human, identifying which ones appear to be true in-between detections.
- Once this is done, the angles and/or distances can be analysed to observe their distribution.
- Based on this analysis, appropriate thresholds (ε and/or σ) can be determined by considering a precision/recall trade-off, optimizing the balance between detecting in-between boxes accurately and minimizing false positives or missed detections.

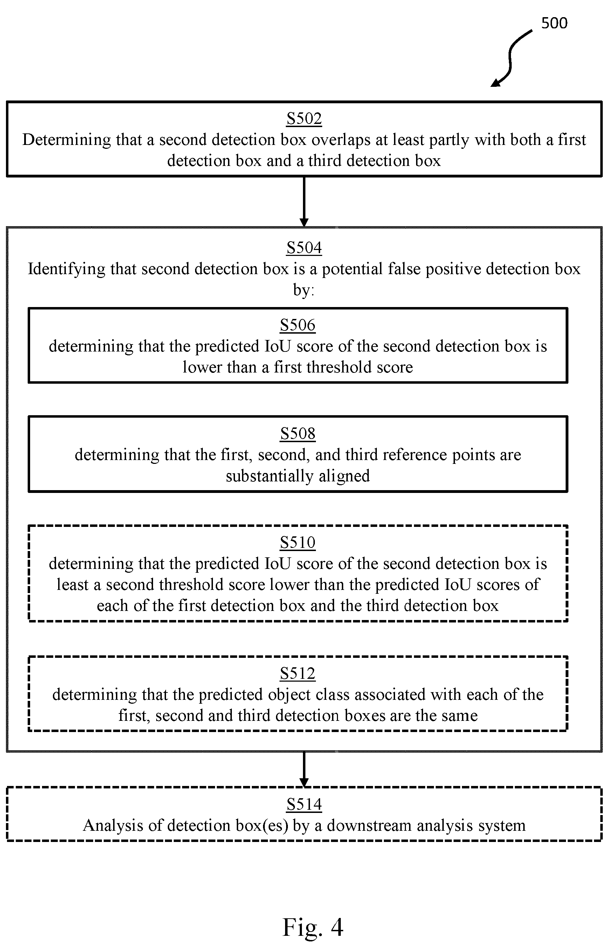

Figure 4 shows by way of example a flow chart of a method 500 for identifying a potential false positive detection box in a set of three detection boxes within an anchor-based object detection system. The method 500 for identifying a potential false positive detection box in a set of three detection boxes within an anchor-based object detection system, wherein each of the three detection boxes is detected in a same image frame, wherein each of the three detection boxes is associated with a respective predicted intersective over union, IoU, score, wherein the predicted IoU score indicates a confidence of the anchor-based object detection system that the detection box represents an object,

The predicted IoU (Intersection over Union) score in an object detection system represents the object detection model's confidence in how accurately a predicted bounding box overlaps with an object in an image. It is based on the object detection model's internal understanding, built from training, of how well the detection box is likely to fit the object it is supposed to represent. The predicted IoU score thus can be seen as an indication of the potential degree of overlap, e.g., measured as the ratio of the intersected area to the combined area of the detection box and the object it represents.

The predicted IoU score may also be referred to as objectness, reflecting how likely it is that the detection box contains an actual object. Throughout training, the object detection model learns these patterns from labelled data, and during inference, the object detection model applies this knowledge to predict how well a detection box will fit an object that the model encounters in new, unseen data.

Overall, the predicted IoU score is a metric that reflects the object detection model's estimation of how well a detection box fits an object, which may be used for guiding the anchor-based object detection system decision on whether to retain or discard the detection during inference. While effective in many cases, it can sometimes require complementary analysis to ensure robustness. For example, the IoU score may not be sufficiently reliable when it comes to identifying in-between detections described herein, and this problem may be handled for example using the method shown in the flow chart of figure 4.

The method 500 comprises determining S502 that a second detection box overlaps at least partly with both a first detection box and a third detection box, wherein the second detection box is located between the first detection box and the third detection box in the image frame. The method 500 first identifies overlapping areas between the second detection box and both the first and third detection boxes. Then, using the detection box coordinates, the method 500 verifies whether the second detection box is spatially located between the first and third detection boxes in the frame. This may for example be done by checking if the centre of the second detection box fall between the centres of the first and third detection boxes, ensuring that the second box is positioned between the other two in the image.

The method then comprises identifying S504 that the second detection box is a potential false positive. The identifying step S504 may comprise a various number of sub-steps, depending on the implementation. The identifying step S504 comprises determining S506 that the predicted IoU score of the second detection box is lower than a first threshold score. Determining an appropriate first threshold score can involve testing and fine-tuning based on empirical data. As discussed above, one approach to identifying this threshold is to run the object detector on a dataset of images and apply a manual review process. During this review, the system annotates detection boxes with the predicted IoU score. By analysing these flagged detections and observing the IoU score distribution for in-between detections and true positive detections, reviewers can set a threshold that balances detection accuracy and false positive reduction, often incorporating a precision/recall trade-off to ensure reliable detection while minimizing erroneous in-between detections.

The identifying step S504 further comprises determining S508 a first reference points in the first detection box, a corresponding second reference point in the second detection box and a corresponding third reference point in the third detection box, and determining that the first, second, and third reference points are substantially aligned in the image frame, such that the second reference point is within a threshold distance from an alignment defined by the first and third reference points. This step S508 may be implemented as described above in conjunction with figure 2 and 3.

The identifying step S504 may in some examples further comprise determining S510 that the predicted IoU score of the second detection box is least a second threshold score lower than the predicted IoU scores of each of the first detection box and the third detection box. Similar to the discussion above relating to the first threshold score, the second threshold score may be determined by testing and fine-tuning based on empirical data.

The identifying step S504 may in some examples further comprise determining S512 that the predicted object class associated with each of the first, second and third detection boxes are the same.

In some cases, the detection boxes identified in the image frame may be subject to further analysis S514 by a downstream analysis system. This additional analysis S514 may specifically take into account that the second detection box has been identified as a potential false positive. Leveraging this information, the downstream analysis system can adjust its analysis S514 accordingly, either deprioritizing the second detection box, flagging it for closer review, or excluding it from critical decisions to enhance the overall reliability and accuracy of the detection process.

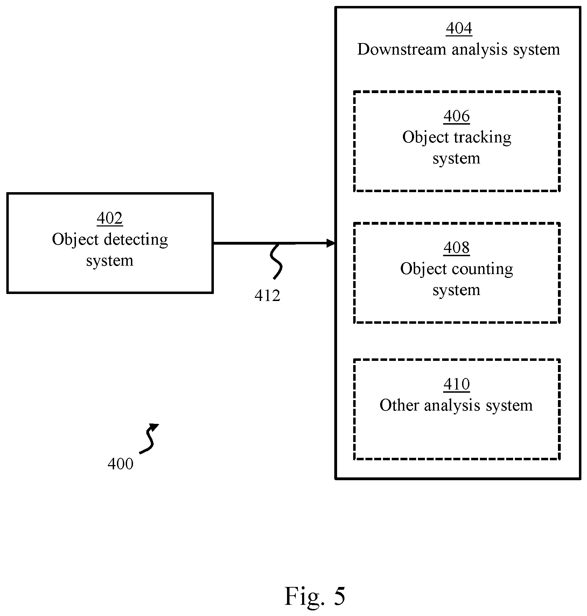

Figure 5 shows by way of example a system 400 comprising an anchor-based object detecting system 402 and a downstream analysis system 404 using the output 412 from the anchor-based object detecting system 402, i.e. the detection boxes, for additional analysis.

For example, the downstream analysis system 404 may comprise an object tracking system 406. The object tracking system 406 may be configured to assigning a lower probability to the second detection box for association with an object track compared to probabilities assigned to the first and third detection boxes. This may be accomplished by assigning a higher cost for association of the second detection box with the object track, compared to the cost for association of the first detection box or the third detection box with the object track. By increasing the cost of associating the second detection box, the tracking system is less likely to link it to an object track unless no better options are available. This cost-based approach allows the object tracking system 406 to focus first on higher-confidence detection boxes (i.e.,

the first and third detection boxes), reducing the likelihood that a potential false positive detection box (the second) interferes with the track association.

Alternatively, or additionally, the lower priority may be accomplished by assigning the second detection box to a lower-priority partition of detection boxes for association with the object track and assigning the first and third detection boxes to a higher-priority partition of detection boxes for association with the object track. The object tracking system 406 can then process these partitions sequentially, first attempting to match object tracks with detection boxes in the higher-priority partition. Only after the high-priority detections are processed does the object tracking system 406 evaluate the lower-priority partition, where the second detection box resides.

The object tracking system 406 may further be configured to filtering out the second detection box from a set of detection boxes in the first image frame that are marked as potential new object tracks in an object tracking system. In other words, the object tracking system 406 may be configured to exclude the second detection box from the initial set of candidate detections used to create new obj ect tracks, ensuring that only the reliable and high-confidence detections (such as the first and third detection boxes) are considered for initializing new tracks.

The downstream analysis system 404 may comprise an object counting system 408. The object counting system 408 may be configured to counting the first and third detection boxes as confirmed objects and counting the second detection box as an uncertain object in the object counting system.

The downstream analysis system 404 may comprise other analysis systems 410, such as behaviour recognition modules, or anomaly detection systems, each of which takes the output from the object detection system 402 as input for further analysis.

In some cases, the second detection box is marked as a potential false positive in the output 412, allowing the downstream analysis system 404 to take this into account when performing further analysis on the detection boxes from the object detection system 402. This approach enables the downstream system 404 to handle potentially ambiguous detections differently, reducing the influence of the false positives in subsequent analysis.

In other implementations, the object detection system 402 may instead filter out the second detection box from an initial set of detection boxes that includes the first, second, and third detection boxes, and using the remaining set of detection boxes in a downstream analysis system 404. By pre-filtering, the object detection system 402 may ensure that only high-confidence detections are used in further analysis, facilitating increased accuracy and reliability in the downstream analysis stages 404. The choice of marking or filtering the second detection box may be implementation-specific and may depend on factors like system requirements, computational resources, and the intended use of the detection results.

The division of functionality for handling a potential false positive detection box within the system 400, including the object detection system 402 and the downstream analysis system 404 with its various subsystems, as illustrated in Figure 5, is provided solely for descriptive clarity. The depicted components, such as the object detection system 402 and specific analysis subsystems within the downstream analysis system 404 (e.g., tracking, counting, and anomaly detection), are shown as distinct entities to clearly convey the roles and processes involved in handling detection boxes and subsequent analysis. However, it should be understood that the techniques discussed here can be implemented in various configurations, and the organization of these components may differ based on system architecture and design choices. For instance, certain functionalities described herein may be integrated into a single module, distributed across multiple subsystems, or implemented through alternative methods that fulfil the same objectives. Therefore, the structure described in Figure 5 is not intended to be limiting, and any configuration that performs object detection, analysis, and further processing as outlined here falls within the scope of this disclosure.

In examples, the methods and techniques described herein, e.g., the method 500 can be implemented using a non-transitory computer-readable storage medium having stored thereon instructions for executing these methods when executed on one or more devices with processing capabilities. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the invention. Further embodiments of the invention are envisaged. For example, other methods of determining if the first, second, and third reference points are substantially aligned in the image frame may be implemented. For example, alignment based on the relative linearity of distances between the reference points may be used. When three points are aligned, the distance between the first and third points should approximately equal the sum of the distances from the first to the second and from the second to the third. A ratio close to 1 indicates alignment, while deviations with more than a threshold value from 1 suggest non-alignment. It is to be understood that any feature described in relation to any one embodiment may be used alone, or in combination with other features described, and may also be used in combination with one or more features of any other of the embodiments, or any combination of any other of the embodiments.

**Claims**

1. A method (500) for identifying a potential false positive detection box in a set of three detection boxes (202, 204, 206) within an anchor-based object detection system (402), wherein each of the three detection boxes is detected in a same image frame (200), wherein each of the three detection boxes is associated with a respective predicted intersective over union, IoU, score, wherein the predicted IoU score indicates a confidence of the anchor-based object detection system that the detection box represents an object, the method comprising:
upon determining (S502) that a second detection box (206) overlaps at least partly with both a first detection box (202) and a third detection box (204), wherein the second detection box is located between the first detection box and the third detection box in the image frame, identifying (S504) that the second detection box is a potential false positive detection box by:

   determining (S506) that the predicted IoU score of the second detection box is lower than a first threshold score; and

   determining (S508) a first reference point (208) in the first detection box, a corresponding second reference point (210) in the second detection box and a corresponding third reference point (212) in the third detection box, wherein each of the first, second and third reference points is in a same relative position within each of the first, second and third detection box respectively, and determining that the second reference point is within a threshold distance from a line formed between the first and third reference point.

2. The method of claim 1, wherein determining that the second reference point is within a threshold distance from a line formed between the first and third reference point comprises:
determining a first vector (214) between a first pair of reference points selected from the first, second and third reference points, and a second vector (216) between a second, different, pair of reference points selected from the first, second and third reference points, wherein the first, second, and third reference points are substantially aligned in the image frame if an absolute value of the cosine of the angle ($\theta$) between the first and second vectors is less than a threshold from 1.

3. The method of any one of claims 1-2, wherein identifying that the second detection box is a potential false positive detection is further performed by:
determining (S510) that the predicted IoU score of the second detection box is least a second threshold score lower than the predicted IoU scores of each of the first detection box and the third detection box.

4. The method of any one of claims 1-3, wherein each of the three detection boxes is associated with a predicted object class, wherein identifying that the second detection box is a potential false positive detection is further performed by:
determining (S512) that the predicted object class associated with each of the first, second and third detection boxes are the same.

5. The method of any one of claims 1-4, wherein the first, second and third reference points are the midpoint of the top edge of the first, second and third detection boxes, respectively.

6. The method of any one of claims 1-4, wherein the first, second and third reference points are the centre point of the first, second and third detection boxes, respectively.

7. The method of any one of claims 1-6, further comprising:
assigning a lower probability to the second detection box for association with an object track in an object tracking system (406), compared to probabilities assigned to the first and third detection boxes

8. The method of claim 7, wherein assigning a lower probability comprises assigning a higher cost for association of the second detection box with the object track, compared to the cost for association of the first detection box or the third detection box with the object track.

9. The method of any one of claims 7-8, wherein assigning a lower probability comprises assigning the second detection box to a lower-priority partition of detection boxes for association with the object track and assigning the first and third detection boxes to a higher-priority partition of detection boxes for association with the object track, wherein the partitions being processed sequentially to associate tracks in the object tracking system.

10. The method of any one of claims 1-9, further comprising:

filtering out the second detection box from a set of detection boxes in the first image frame that are marked as potential new object tracks in an object tracking system.

11. The method of any one of claims 1-10, further comprising
counting the first and third detection boxes as confirmed objects in an object counting system (408) and counting the second detection box as an uncertain object in the object counting system.

12. The method of any one of claims 1-6, further comprising:
filtering out the second detection box from an initial set of detection boxes that includes the first, second, and third detection boxes, and using the remaining set of detection boxes in a downstream analysis system (404).

13. A non-transitory computer-readable storage medium having stored thereon instructions for implementing the method according to any one of claims 1-12 when executed on one or more devices having processing capabilities.

14. An anchor-based object detecting system (402) configured for identifying a potential false positive detection box in a set of three detection boxes (202, 204, 206), wherein each of the three detection boxes is detected in a same image frame (200), wherein each of the three detection boxes is associated with a respective predicted intersective over union, IoU, score, wherein the predicted IoU score indicates a confidence of by the anchor-based object detecting system that the detection box represents an object, the anchor-based object detecting system configured for:
upon determining (S502) that a second detection box (206) overlaps at least partly with both a first detection box (202) and a third detection box (204), wherein the second detection box is located between the first detection box and the third detection box in the image frame, identifying (S504) that the second detection box is a potential false positive detection box by:

determining (S506) that the IoU score of the second detection box is lower than a first threshold score; and determining (S508) a first reference point (208) in the first detection box, a corresponding second reference point (210) in the second detection box and a corresponding third reference point (212) in the third detection box, wherein each of the first, second and third reference points is in a same relative position within each of the first, second and third detection box respectively, and determining that the second reference point is within a threshold distance from a line formed between the first and third reference point.

## Patentansprüche

1. Verfahren (500) zum Identifizieren eines potenziell falsch positiven Erkennungsrahmens in einem Satz von drei Erkennungsrahmen (202, 204, 206) innerhalb eines ankerbasierten Objekterkennungssystems (402), wobei jeder der drei Erkennungsrahmen in ein und demselben Bildfeld (200) erkannt wird, wobei jeder der drei Erkennungsrahmen mit einem jeweils vorhergesagten IoU(Intersection over union - Schnittmenge über Vereinigungsmenge)-Wert assoziiert ist, wobei der vorhergesagte IoU-Wert eine Konfidenz des ankerbasierten Objekterkennungssystems angibt, dass der Erkennungsrahmen ein Objekt darstellt, wobei das Verfahren Folgendes umfasst:
bei Bestimmen (S502), dass sich ein zweiter Erkennungsrahmen (206) zumindest teilweise sowohl mit einem ersten Erkennungsrahmen (202) als auch einem dritten Erkennungsrahmen (204) überlappt, wobei sich der zweite Erkennungsrahmen zwischen dem ersten Erkennungsrahmen und dem dritten Erkennungsrahmen in dem Bildfeld befindet, Identifizieren (S504), dass der zweite Erkennungsrahmen ein potenziell falsch positiver Erkennungsrahmen ist, durch:

Bestimmen (S506), dass der vorhergesagte IoU-Wert des zweiten Erkennungsrahmens niedriger als der erste Schwellenwert ist; und
Bestimmen (S508) eines ersten Referenzpunkts (208) in dem ersten Erkennungsrahmen, eines entsprechenden zweiten Referenzpunkts (210) in dem zweiten Erkennungsrahmen und eines entsprechenden dritten Referenzpunkts (212) in dem dritten Erkennungsrahmen, wobei sich jeder von dem ersten, dem zweiten und dem dritten Referenzpunkt jeweils in derselben relativen Position innerhalb jedes von dem ersten, dem zweiten und dem dritten Erkennungsrahmen befindet, sowie Bestimmen, dass der zweite Referenzpunkt innerhalb eines Schwellenwerts für den Abstand von einer Linie liegt, die zwischen dem ersten und dem dritten Referenzpunkt gebildet wird.

2. Verfahren nach Anspruch 1, wobei das Bestimmen, dass der zweite Referenzpunkt innerhalb eines Schwellenwerts für den Abstand von einer Linie liegt, die zwischen dem ersten und dem dritten Referenzpunkt gebildet wird, Folgendes umfasst:

Bestimmen eines ersten Vektors (214) zwischen einem ersten Paar von Referenzpunkten, die aus dem ersten, dem zweiten und dem dritten Referenzpunkt ausgewählt werden, und eines zweiten Vektors (216) zwischen einem zweiten, davon verschiedenen Paar von Referenzpunkten, die aus dem ersten, dem zweiten und dem dritten Referenzpunkt ausgewählt werden, wobei der erste, der zweite und der dritte Referenzpunkt in dem Bildfeld im Wesentlichen aneinander ausgerichtet sind, wenn ein absoluter Wert des Kosinus des Winkels (θ) zwischen dem ersten und dem zweiten Vektor kleiner als ein Schwellenwert von 1 ist.

3. Verfahren nach einem der Ansprüche 1-2, wobei das Identifizieren, dass der zweite Erkennungsrahmen eine potenziell falsch positive Erkennung ist, ferner durchgeführt wird durch:
Bestimmen (S510), dass der vorhergesagte IoU-Wert des zweiten Erkennungsrahmens zumindest um einen zweiten Schwellenwert niedriger als die vorhergesagten IoU-Werte jedes von dem ersten Erkennungsrahmen und dem dritten Erkennungsrahmen ist.

4. Verfahren nach einem der Ansprüche 1-3, wobei jeder der drei Erkennungsrahmen mit einer vorhergesagten Objektklasse assoziiert ist, wobei das Identifizieren, dass der zweite Erkennungsrahmen eine potenziell falsch positive Erkennung ist, ferner durchgeführt wird durch:
Bestimmen (S512), dass die vorhergesagte Objektklasse, die mit jedem von dem ersten, dem zweiten und dem dritten Erkennungsrahmen assoziiert ist, die gleiche ist.

5. Verfahren nach einem der Ansprüche 1-4, wobei der erste, der zweite und der dritte Referenzpunkt der Mittelpunkt der oberen Kante von jeweils dem ersten, dem zweiten und dem dritten Erkennungsrahmen sind.

6. Verfahren nach einem der Ansprüche 1-4, wobei der erste, der zweite und der dritte Referenzpunkt der Zentrumspunkt von jeweils dem ersten, dem zweiten und dem dritten Erkennungsrahmen sind.

7. Verfahren nach einem der Ansprüche 1-6, ferner Folgendes umfassend:
Zuweisen einer niedrigeren Wahrscheinlichkeit zu dem zweiten Erkennungsrahmen zur Assoziierung mit einer Objektspur in einem Objektverfolgungssystem (406) im Vergleich zu Wahrscheinlichkeiten, die dem ersten und dem dritten Erkennungsrahmen zugewiesen werden.

8. Verfahren nach Anspruch 7, wobei das Zuweisen einer niedrigeren Wahrscheinlichkeit Folgendes umfasst: Zuweisen höherer Kosten für die Assoziierung des zweiten Erkennungsrahmens mit der Objektspur im Vergleich zu den Kosten für die Assoziierung des ersten oder des dritten Erkennungsrahmens mit der Objektspur.

9. Verfahren nach einem der Ansprüche 7-8, wobei das Zuweisen einer niedrigeren Wahrscheinlichkeit das Zuweisen des zweiten Erkennungsrahmens zu einer Partition von Erkennungsrahmen mit niedrigerer Priorität für die Assoziierung mit der Objektspur sowie das Zuweisen des ersten und des dritten Erkennungsrahmens zu einer Partition von Erkennungsrahmen mit höherer Priorität für die Assoziierung mit der Objektspur umfasst, wobei die Partitionen sequenziell verarbeitet werden, um Spuren in dem Objektverfolgungssystem zu assoziieren.

10. Verfahren nach einem der Ansprüche 1-9, ferner Folgendes umfassend:
Herausfiltern des zweiten Erkennungsrahmens aus einem Satz von Erkennungsrahmen in dem ersten Bildfeld, die in einem Objektverfolgungssystem als potenziell neue Objektspuren markiert sind.

11. Verfahren nach einem der Ansprüche 1-10, ferner Folgendes umfassend:
Zählen des ersten und des dritten Erkennungsrahmens als bestätigte Objekte in einem Objektzählsystem (408) und Zählen des zweiten Erkennungsrahmens als unsicheres Objekt in dem Objektzählsystem.

12. Verfahren nach einem der Ansprüche 1-6, ferner Folgendes umfassend:
Herausfiltern des zweiten Erkennungsrahmens aus einem anfänglichen Satz von Erkennungsrahmen, der den ersten, den zweiten und den dritten Erkennungsrahmen beinhaltet, und Verwenden des verbleibenden Satzes von Erkennungsrahmen in einem nachgelagerten Analysesystem (404).

13. Nichttransitorisches computerlesbares Speichermedium, auf dem Anweisungen zum Implementieren des Verfahrens nach einem der Ansprüche 1-12 gespeichert sind, wenn sie auf einer oder mehreren Vorrichtungen mit Verarbeitungsfähigkeiten ausgeführt werden.

**14.** Ankerbasiertes Objekterkennungssystem (402), ausgelegt zum Identifizieren eines potenziell falsch positiven Erkennungsrahmens in einem Satz von drei Erkennungsrahmen (202, 204, 206), wobei jeder der drei Erkennungsrahmen in ein und demselben Bildfeld (200) erkannt wird,

wobei jeder der drei Erkennungsrahmen mit einem jeweils vorhergesagten IoU(intersection over union - Schnittmenge über Vereinigungsmenge)-Wert assoziiert ist, wobei der vorhergesagte IoU-Wert eine Konfidenz des ankerbasierten Objekterkennungssystems angibt, dass der Erkennungsrahmen ein Objekt darstellt, wobei das ankerbasierte Objekterkennungssystem ausgelegt ist zum:

bei Bestimmen (S502), dass sich ein zweiter Erkennungsrahmen (206) zumindest teilweise sowohl mit einem ersten Erkennungsrahmen (202) als auch mit einem dritten Erkennungsrahmen (204) überlappt, wobei sich der zweite Erkennungsrahmen zwischen dem ersten Erkennungsrahmen und dem dritten Erkennungsrahmen in dem Bildfeld befindet, Identifizieren (S504), dass der zweite Erkennungsrahmen ein potenziell falsch positiver Erkennungsrahmen ist, durch:

Bestimmen (S506), dass der IoU-Wert des zweiten Erkennungsrahmens niedriger als ein erster Schwellenwert ist; und

Bestimmen (S508) eines ersten Referenzpunkts (208) in dem ersten Erkennungsrahmen, eines entsprechenden zweiten Referenzpunkts (210) in dem zweiten Erkennungsrahmen und eines entsprechenden dritten Referenzpunkts (212) in dem dritten Erkennungsrahmen, wobei sich jeder von dem ersten, dem zweiten und dem dritten Referenzpunkt jeweils in ein und derselben relativen Position innerhalb jedes von dem ersten, dem zweiten und dem dritten Erkennungsrahmen befindet, und Bestimmen, dass der zweite Referenzpunkt innerhalb eines Schwellenwerts für den Abstand von einer Linie liegt, die zwischen dem ersten und dem dritten Referenzpunkt gebildet wird.

## Revendications

**1.** Procédé (500) d'identification d'une boîte de détection de faux positifs potentiels dans un ensemble de trois boîtes de détection (202, 204, 206) à l'intérieur d'un système de détection d'objet à base d'ancrage (402), chacune des trois boîtes de détection étant détectée dans une même trame d'image (200), chacune des trois boîtes de détection étant associée à un score d'intersection sur union, IoU, prédit respectif, le score IoU prédit indiquant une confiance du système de détection d'objet à base d'ancrage en ce que la boîte de détection représente un objet, le procédé comprenant :

lors de la détermination (S502) qu'une deuxième boîte de détection (206) recouvre au moins partiellement à la fois une première boîte de détection (202) et une troisième boîte de détection (204), la deuxième boîte de détection étant située entre la première boîte de détection et la troisième boîte de détection dans la trame d'image, l'identification (S504) que la deuxième boîte de détection est une boîte de détection de faux positifs potentiels par :

la détermination (S506) que le score IoU prédit de la deuxième boîte de détection est inférieur à un premier score de seuil ; et

la détermination (S508) d'un premier point de référence (208) dans la première boîte de détection, d'un deuxième point de référence (210) correspondant dans la deuxième boîte de détection et d'un troisième point de référence (212) correspondant dans la troisième boîte de détection, chacun des premier, deuxième et troisième points de référence étant dans une même position relative à l'intérieur respectivement de chacune des première, deuxième et troisième boîtes de détection, et la détermination que le deuxième point de référence est à l'intérieur d'une distance de seuil à partir d'une ligne formée entre le premier et le troisième point de référence.

**2.** Procédé selon la revendication 1, dans lequel la détermination que le deuxième point de référence est à l'intérieur d'une distance de seuil à partir d'une ligne formée entre les premier et troisième points de référence comprend :

la détermination d'un premier vecteur (214) entre une première paire de points de référence sélectionnés parmi les premier, deuxième et troisième points de référence, et d'un second vecteur (216) entre une deuxième paire différente de points de référence sélectionnés parmi les premier, deuxième et troisième points de référence, les premier, deuxième et troisième points de référence étant sensiblement alignés dans la trame d'image si une valeur absolue du cosinus de l'angle ($\theta$) entre les premier et second vecteurs est inférieure à un seuil de 1.

**3.** Procédé selon l'une quelconque des revendications 1 et 2, dans lequel l'identification que la deuxième boîte de détection est une détection de faux positifs potentiels est en outre réalisée par :

la détermination (S510) que le score IoU prédit de la deuxième boîte de détection est au moins un second score de seuil inférieur aux scores IoU prédits de chacune de la première boîte de détection et de la troisième boîte de détection.

4. Procédé selon l'une quelconque des revendications 1 à 3, dans lequel chacune des trois boîtes de détection est associée à une classe d'objet prédite, l'identification que la deuxième boîte de détection est une détection de faux positifs potentiels étant en outre réalisée par :
la détermination (S512) que la classe d'objets prédite associée à chacune des première, deuxième et troisième boîtes de détection sont les mêmes.

5. Procédé selon l'une quelconque des revendications 1 à 4, dans lequel les premier, deuxième et troisième points de référence sont le point médian du bord supérieur des première, deuxième et troisième boîtes de détection, respectivement.

6. Procédé selon l'une quelconque des revendications 1 à 4, dans lequel les premier, deuxième et troisième points de référence sont le point central des première, deuxième et troisième boîtes de détection, respectivement.

7. Procédé selon l'une quelconque des revendications 1 à 6, comprenant en outre :
l'attribution d'une probabilité plus faible à la deuxième boîte de détection pour l'association à une piste d'objet dans un système de suivi d'objet (406), comparée à des probabilités attribuées aux première et troisième boîtes de détection.

8. Procédé selon la revendication 7, dans lequel l'attribution d'une probabilité plus faible comprend l'attribution d'un coût plus élevé pour l'association de la deuxième boîte de détection à la piste d'objet, comparée au coût pour l'association de la première boîte de détection ou de la troisième boîte de détection à la piste d'objet.

9. Procédé selon l'une quelconque des revendications 7 à 8, dans lequel l'attribution d'une probabilité plus faible comprend l'attribution de la deuxième boîte de détection à une partition de priorité plus faible de boîtes de détection pour l'association à la piste d'objet et l'attribution des première et troisième boîtes de détection à une partition de priorité plus élevée de boîtes de détection pour l'association à la piste d'objet, les partitions étant traitées séquentiellement pour associer des pistes dans le système de suivi d'objet.

10. Procédé selon l'une quelconque des revendications 1 à 9, comprenant en outre :
le filtrage de la deuxième boîte de détection à partir d'un ensemble de boîtes de détection dans la première trame d'image qui sont marquées en tant que nouvelles pistes d'objet potentielles dans un système de suivi d'objet.

11. Procédé selon l'une quelconque des revendications 1 à 10, comprenant en outre
le comptage des première et troisième boîtes de détection en tant qu'objets confirmés dans un système de comptage d'objets (408) et le comptage de la deuxième boîte de détection en tant qu'objet incertain dans le système de comptage d'objets.

12. Procédé selon l'une quelconque des revendications 1 à 6, comprenant en outre :
le filtrage de la deuxième boîte de détection à partir d'un ensemble initial de boîtes de détection comprenant les première, deuxième et troisième boîtes de détection, et l'utilisation de l'ensemble restant de boîtes de détection dans un système d'analyse aval (404).

13. Support de stockage non transitoire lisible par ordinateur ayant, stockées sur celui-ci, des instructions pour mettre en œuvre le procédé selon l'une quelconque des revendications 1 à 12 lorsqu'elles sont exécutées sur un ou plusieurs dispositifs ayant des capacités de traitement.

14. Système de détection d'objet à base d'ancrage (402) configuré pour identifier une boîte de détection de faux positifs potentiels dans un ensemble de trois boîtes de détection (202, 204, 206), chacune des trois boîtes de détection étant détectée dans une même trame d'image (200), chacune des trois boîtes de détection étant associée à un score d'intersection sur union, IoU, prédit respectif, le score IoU prédit indiquant une confiance du système de détection d'objet à base d'ancrage en ce que la boîte de détection représente un objet, le système de détection d'objet à base d'ancrage étant configuré pour :
lors de la détermination (S502) qu'une deuxième boîte de détection (206) recouvre au moins partiellement à la fois une première boîte de détection (202) et une troisième boîte de détection (204), la deuxième boîte de détection étant située entre la première boîte de détection et la troisième boîte de détection dans la trame d'image, l'identification (S504) que la deuxième boîte de détection est une boîte de détection de faux positifs potentiels par :

14

la détermination (S506) que le score IoU de la deuxième boîte de détection est inférieur à un premier score de seuil ; et

la détermination (S508) d'un premier point de référence (208) dans la première boîte de détection, d'un deuxième point de référence (210) correspondant dans la deuxième boîte de détection et d'un troisième point de référence (212) correspondant dans la troisième boîte de détection, chacun des premier, deuxième et troisième points de référence étant dans une même position relative à l'intérieur respectivement de chacune des première, deuxième et troisième boîtes de détection, et la détermination que le deuxième point de référence est à l'intérieur d'une distance de seuil à partir d'une ligne formée entre le premier et le troisième point de référence.

Fig. 1

Fig. 2

Fig. 3

500

**S502**
Determining that a second detection box overlaps at least partly with both a first detection box and a third detection box

**S504**
Identifying that second detection box is a potential false positive detection box by:

**S506**
determining that the predicted IoU score of the second detection box is lower than a first threshold score

**S508**
determining that the first, second, and third reference points are substantially aligned

**S510**
determining that the predicted IoU score of the second detection box is least a second threshold score lower than the predicted IoU scores of each of the first detection box and the third detection box

**S512**
determining that the predicted object class associated with each of the first, second and third detection boxes are the same

**S514**
Analysis of detection box(es) by a downstream analysis system

Fig. 4

**404**
Downstream analysis system

**406**
Object tracking
system

**408**
Object counting
system

**410**
Other analysis system

**402**
Object detecting
system

412

400

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RUI et al.** *Neural Computing and Applications*